# EUROPÄISCHE PATENTANMELDUNG

(11) **EP 2 786 862 A1**
(43) Veröffentlichungstag der Anmeldung: **08.10.2014**
(21) Anmeldenummer: 13162533.7
(22) Anmeldetag: 05.04.2013
(51) Int. Cl.: B32B 3/12

(54) **Sandwichplatte**

(71) Anmelder: Bucher Interiors GmbH, 35764 Sinn-Fleisbach (DE)
(72) Erfinder: Rommerskirchen, Jörg, 35745 Herborn (DE)
(74) Vertreter: advotec.

(57) **Zusammenfassung**

Die Erfindung betrifft eine Sandwichplatte (10) mit einem zwischen zwei Decklagen (11, 12) angeordneten Stützkern (13) mit Wabenstruktur, wobei der Stützkern zumindest zwei Stützlagen (14, 15) aufweist, die jeweils eine durch eine Vielzahl von Stützwaben gebildete Wabenstruktur (17, 18) aufweisen, wobei die Stützlagen in einer von den Decklagen parallelen Stützebene versetzt zueinander angeordnet sind, derart, dass zur Ausbildung kommunizierender Stützwaben Wandungen der Stützwaben der ersten Stützlage versetzt zu Wandungen der Stützwaben der zweiten Stützlage angeordnet sind.

## Beschreibung

Die vorliegende Erfindung betrifft eine Sandwichplatte mit einem zwischen zwei Decklagen angeordneten Stützkern mit Wabenstruktur.

Sandwichplatten mit einem Stützkern mit Wabenstruktur werden insbesondere im Leichtbau eingesetzt, wo es darum geht, Bauteile oder Komponenten zu ermöglichen, die bei geringem Eigengewicht eine möglichst hohe Tragkraft bzw. Belastbarkeit gewährleisten.

Für den Aufbau derartiger Sandwichplatten werden unterschiedliche Materialien eingesetzt, wobei für den Stützkern mit Wabenstruktur Pappe, harzgetränktes Papier, Faserkunststoff oder auch Aluminiumfolien oder dergleichen verwendet werden. Die Decklagen werden in der Regel in ihrem Material auf das Stützkernmaterial abgestimmt und können daher ebenso aus Pappe, Kunststoff, Faserverbundwerkstoffen oder auch Metallblechen bestehen. Üblicherweise werden die Decklagen mit dem Stützkern verklebt.

Für die Herstellung von Flugzeugeinbauten, insbesondere so genannten "Galleys" hat sich die Verwendung einer Sandwichplatte bewährt, bei der Stützkerne verwendet werden, die als Basismaterial ein Aramidfaser-Papier verwenden, das mit Phenolharz getränkt ist. Als Decklagen werden häufig glasfaserverstärkte Kunststoffe verwendet.

Aufgrund ihrer Wabenstruktur weisen Sandwichplatten eine Vielzahl von abgeschlossenen, Lufteinschlüsse enthaltenden Hohlräumen auf, wobei die Lufteinschlüsse insbesondere durch die bei der Fertigung der Sandwichplatten in den Wabenhohlräumen eingeschlossene Umgebungsluft gebildet werden. In der Praxis hat sich herausgestellt, dass es bei einer Temperaturbelastung von Sandwichplatten, die beispielsweise durch Strahlungswärme erfolgen kann, infolge eines Druckanstiegs in den Hohlräumen zu einer Ablösung der Decklagen von der Wabenstruktur des Stützkerns kommen kann. Dies führt zu einem schlagartigen Abfall der Tragfähigkeit der Sandwichplatten.

Da das vorstehend beschriebene Phänomen bereits bei Temperaturen ab 85° C zu beobachten ist und im Wesentlichen nur wenig abhängig von der Materialauswahl für den Stützkern und die Decklagen zu sein scheint, betrifft das Problem der geringen Temperaturstabilität grundsätzlich alle Einsatzbereiche, in denen entsprechende Temperaturbelastungen auftreten können. Dies sind daher nicht nur Anwendungen in der Luftfahrt und verwandten Gebieten sondern tatsächlich alle Anwendungen, bei denen eine ausreichende Temperaturbelastung auftreten kann.

Der vorliegenden Erfindung liegt daher die Aufgabe zugrunde, eine Sandwichplatte vorzuschlagen, die eine größere Temperaturstabilität aufweist.

Zur Lösung dieser Aufgabe weist die erfindungsgemäße Sandwichplatte die Merkmale des Anspruch 1 auf.

Erfindungsgemäß weist der Stützkern der Sandwichplatte zumindest zwei Stützlagen auf, die jeweils eine durch eine Vielzahl von Stützwaben gebildete Wabenstruktur aufweisen, wobei die Stützlagen in einer zu den Decklagen parallelen Stützebene versetzt zueinander angeordnet sind, derart, dass zur Ausbildung kommunizierender Stützwaben Wandungen der Stützwaben der ersten Stützlage versetzt zu Wandungen der Stützwaben der zweiten Stützlage angeordnet sind.

Der Erfindung liegt der Gedanken zugrunde, durch die versetzte Anordnung von zwei Stützlagen eine Verbindung zwischen Stützwaben der Stützlagen herzustellen, die bei einer in der Regel nur lokal auftretenden Temperaturbelastung der Sandwichplatte einen Ausdehnungsraum für eine Stützwabe der einen Stützlage durch die Verbindung dieser Stützwabe mit zumindest einer Stützwabe der anderen Stützlage ermöglicht. Im Gegensatz hierzu ist bei den herkömmlichen Sandwichplatten aufgrund des bekannten Aufbaus jede Stützwabe durch die oberhalb und unterhalb der Stützwabe angeordnete Decklage von den anderen Stützwaben abgeschlossen. Infolge einer lokalen Erwärmung und eines damit verbundenen Druckanstiegs in der lokal beaufschlagten Stützwabe kommt es zu einer Expansion des in der Stützwabe eingeschlossenen Gasvolumens und gegebenenfalls bei ausreichendem Druckanstieg zu einer Delamination der Decklagen vom Stützkern, also zu einer Trennung der mechanischen Verbindung zwischen der Stützwabe und den Decklagen.

Im Gegensatz hierzu ermöglicht die kommunizierende Anordnung von Stützwaben der einen Stützlage mit Stützwaben der anderen Stützlage bei einem lokalen Druckanstieg in der einen Stützlage aufgrund der Verbindung zu Stützwaben der anderen Stützlage einen Druckausgleich zwischen den Stützlagen, so dass sich im Ergebnis ein vergleichsweise geringerer Druck in dem vergrößerten Ausdehnungsraum ausbildet.

Bei einer bevorzugten Ausführungsform der Sandwichplatte ist zwischen den Stützlagen des Stützkerns eine zumindest im Bereich der kommunizierenden Stützwaben gasdurchlässige Zwischenlage angeordnet, so dass der mechanische Verbund zwischen den Stützlagen mittels der Verbindungslage verstärkt werden kann, ohne dass die kommunizierende Anordnung der Stützwaben hierdurch beeinträchtigt würde.

Als besonders vorteilhaft erweist sich, wenn die Zwischenlage aus einer perforierten Decklage gebildet ist, da somit für die Zwischenlage gegebenenfalls dasselbe Material verwendet werden kann, wie für die äußeren Decklagen.

Besonders vorteilhaft ist es auch, wenn die Wabenstrukturen der Stützlagen überstimmend ausgebildet sind, da somit in Kombination mit der zueinander versetzten Anordnung der Stützlagen eine kommunizierende Anordnung sämtlicher Stützwaben miteinander möglich ist, so dass ein maximal möglicher Druckausgleichsraum geschaffen wird.

Je nach Einsatz der Sandwichplatte kann es auch vorteilhaft sein, wenn die Wabenstrukturen der Stützlagen unterschiedlich ausgebildet sind, um beispielsweise durch eine größere Wabendichte pro Flächeneinheit bei der einen Stützlage eine gegebenenfalls gewünschte von der Belastungsrichtung abhängige Stabilität bzw. Tragfähigkeit der Sandwichplatte zu erzielen.

Wenn etwa die Wabenstrukturen unterschiedlich dimensionierte Stützwaben aufweisen, also die Stützwaben der einen Stützlage größer oder kleiner ausgebildet sind als die Stützwaben der anderen Stützlage, kann die Sandwichplatte quer zur Stützebene richtungsabhängig unterschiedliche Biegelasten aufnehmen.

In dem Fall, dass die Sandwichplatte Wabenstrukturen der Stützlagen aufweist, die übereinstimmend ausgebildet sind, erweist es sich als besonders vorteilhaft, wenn die Stützwaben der Wabenstrukturen der Stützlagen in drei Stützpunkten der Stützebene aufeinanderliegen, so dass zum einen eine Abstützung der Stützlagen gegeneinander in möglichst vielen Punkten der Stützebene möglich wird und zum anderen die aufgrund der Wabenform in der Stützebene unterschiedlichen mechanischen Eigenschaften der Stützlage ausgeglichen werden, also die Richtungsabhängigkeit im Stabilitätsverhalten der Sandwichplatte weniger stark ausgeprägt ist.

Je nach Anwendung bzw. Einsatzgebiet der Sandwichplatte kann es sich auch als vorteilhaft erweisen, die Decklage mehrschichtig auszubilden, oder auch stattdessen oder gegebenenfalls zusätzlich zwischen der Decklage bzw. den Schichten der Decklage und dem Stützkern ein die mechanische Verbindung zum Stützkern stärkendes Verbindungsgewebe bzw. eine Verbindungslage anzuordnen. Diese Verbindungslage oder Zwischenlage kann besonders vorteilhaft aus demselben Material wie die Verbindungslage zwischen den Stützlagen des Stützkerns gebildet sein.

Nachfolgend wird eine bevorzugte Ausführungsform der Sandwichplatte anhand der Zeichnung näher erläutert. Es zeigen:
- **Fig. 1**: eine Sandwichplatte in Schnittdarstellung mit zwei zwischen zwei Decklagen angeordneten Stützlagen eines Stützkerns;
- **Fig. 2**: die Sandwichplatte in Explosionsdarstellung;
- **Fig. 3**: eine isometrische Darstellung des Stützkerns.

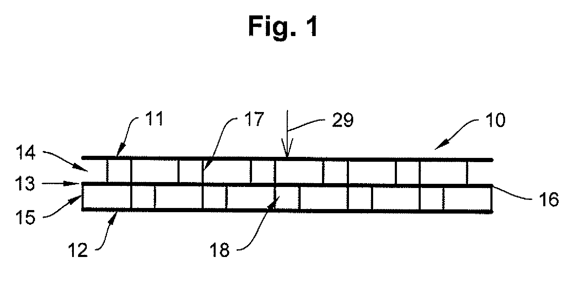

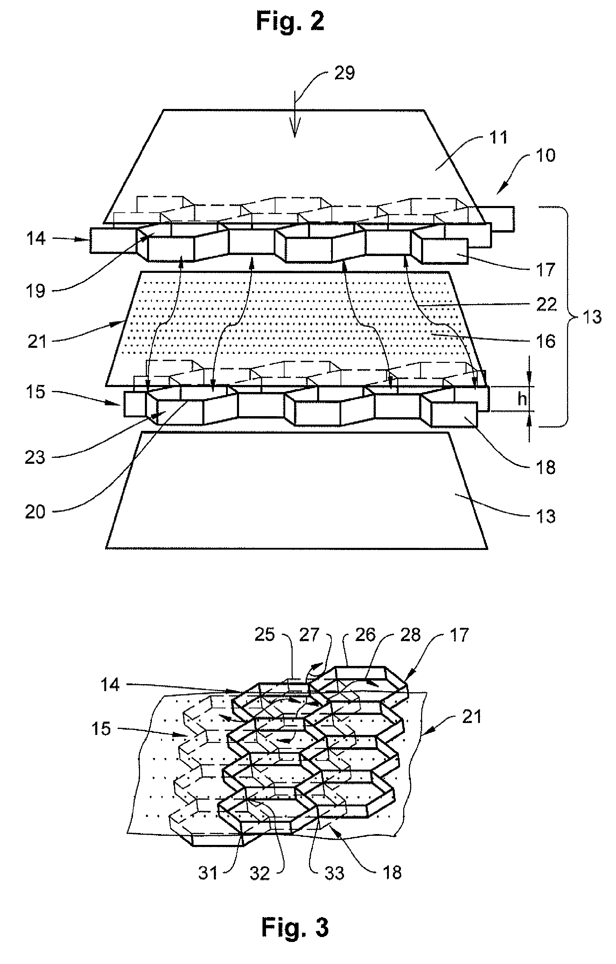

Die **Fig. 1** **und** **2** zeigen eine Sandwichplatte 10 mit einem zwischen einer oberen Decklage 11 und einer unteren Decklage 12 angeordneten Stützkern 13, der im Fall des dargestellten Ausführungsbeispiels eine obere Stützlage 14 und eine untere Stützlage 15 aufweist, zwischen denen eine perforierte, also gasdurchlässige Zwischenlage 16 angeordnet ist.

Die Stützlagen 14, 15 weisen jeweils eine Wabenstruktur 17 bzw. 18 auf, wobei die Wabenstrukturen 17 und 18, wie insbesondere Fig. 2 zeigt, in dem vorliegenden Fall jeweils Stützwaben 19 bzw. 23 aufweisen, die identisch dimensioniert sind, also sowohl eine übereinstimmende Wabenweite oder Schlüsselweite, und somit einen übereinstimmenden Profilquerschnitt 20, als auch eine übereinstimmende Wabenhöhe h aufweisen.

Bei dem dargestellten Ausführungsbeispiel bestehen die Stützlagen 14, 15 bzw. deren Wabenstruktur 17 bzw. 18 aus einem papierähnlichen, phenolharzgetränkten Aramidfaser-Gewebe.

Die Zwischenlage 16 befindet sich in einer parallel zu den Decklagen 11, 12 angeordneten Stützebene 21 und ermöglicht neben einer kraftschlüssigen Verbindung der Stützlagen 14, 15 eine kommunizierende Anordnung der Stützwaben 19 der Stützlage 14 mit den Stützwaben 23 der Stützlage 15, derart, dass eine Gasströmung 22 zwischen den Stützwaben 19, 23 der unterschiedlichen Stützlagen 14, 15 ermöglicht wird.

Wie die **Fig. 3** noch deutlicher zeigt, ermöglicht die in der Stützebene 21 zueinander versetzte Anordnung der Wabenstrukturen 17, 18 der Stützlagen 14, 15 ein in beiden Achsenrichtungen der Stützebene verlaufende, um Wandungen 25 bzw. 26 der Wabenstrukturen 17, 18 mäandernde Gasströmungen 27, 28 in unterschiedlichen Richtungen der Ebene 21.

Wie durch einen Belastungspfeil 29 in den **Fig. 1** **und** **2****,** der eine lokale Temperaturbelastung der Sandwichplatte 10 darstellen soll, schematisch erläutert werden soll, führt ein lokaler Druckanstieg im Bereich einer oder mehrerer benachbarter Stützwaben 19 der oberen Stützlage 14 infolge eines damit verbundenen lokalen Druckanstiegs im Bereich dieser Stützwaben 19 aufgrund der kommunizierenden Anordnung der Stützwaben 19, 23 in den übereinanderliegend angeordneten Stützlagen 14, 15 zu den insbesondere in **Fig. 3** dargestellten mäandernden Gasströmungen 27, 28.

Wie insbesondere **Fig. 3** zeigt, sind in dem dargestellten Ausführungsbeispiel die identisch ausgebildeten Wabenstrukturen 17, 18 bzw. Stützlagen 14, 15 in der Stützebene 21 derart zueinander versetzt, dass zwischen den Stützwaben 19, 23 jeweils drei Berührungspunkte 31, 32, 33 ausgebildet sind, die in der Stützebene 21 liegen.

## Patentansprüche

1. Sandwichplatte (10) mit einem zwischen zwei Decklagen (11, 12) angeordneten Stützkern (13) mit Wabenstruktur
**dadurch gekennzeichnet,**
**dass** der Stützkern zumindest zwei Stützlagen (14, 15) aufweist, die jeweils eine durch eine Vielzahl von Stützwaben (19, 23) gebildete Wabenstruktur (17, 18), aufweisen, wobei die Stützlagen in einer von den Decklagen parallelen Stützebene (21) versetzt zueinander angeordnet sind, derart, dass zur Ausbildung kommunizierender Stützwaben Wandungen (25) der Stützwaben der ersten Stützlage versetzt zu Wandungen (26) der Stützwaben der zweite Stützlage angeordnet sind.

2. Sandwichplatte nach Anspruch 1,
**dadurch gekennzeichnet,**
**dass** zwischen den Stützlagen (14, 15) des Stützkerns (13) eine zumindest im Bereich der kommunizierenden Stützwaben (19, 23) gasdurchlässige Zwischenlage (16) angeordnet ist.

3. Sandwichplatte nach Anspruch 2,
**dadurch gekennzeichnet,**
**dass** die Zwischenlage (16) aus einer perforierten Decklage (11, 12) gebildet ist.

4. Sandwichplatte nach einem der vorangehenden Ansprüche,
**dadurch gekennzeichnet,**
**dass** die Wabenstrukturen (17, 18) der Stützlagen (14, 15) übereinstimmend ausgebildet sind.

5. Sandwichplatte nach einem der vorangehenden Ansprüche,
**dadurch gekennzeichnet,**
**dass** die Wabenstrukturen der Stützlagen unterschiedlich ausgebildet sind.

6. Sandwichplatte nach Anspruch 5,
**dadurch gekennzeichnet,**
**dass** die Wabenstrukturen unterschiedlich dimensionierte Stützwaben aufweisen.

7. Sandwichplatte nach Anspruch 4,
**dadurch gekennzeichnet,**
**dass** die Stützwaben (19, 23) der Wabenstrukturen (17, 18) in drei Stützpunkten (31, 32, 33) der Stützebene (21) aufeinanderliegen.
